# EUROPEAN PATENT APPLICATION

(11) **EP 1 316 892 A1**
(43) Date of publication of application: **04.06.2003**
(21) Application number: 01956825.2
(22) Date of filing: 09.08.2001
(51) Int. Cl.: G06F 15/00, G06F 17/60

(54) **MEMBER INFORMATION TRANSMITTING METHOD, INDIVIDUAL INFORMATION ACQUIRING METHOD, AND SYSTEM**

(30) Priority: 11.08.2000 JP 2000245063
(71) Applicant: Nifty Corporation, Shingawa-ku, Tokyo 140-8544 (JP)
(72) Inventor: KANAISHI, Shino, c/o NIFTY CORPORATION, Shinagawa-ku, Tokyo 140-8544 (JP); SHIBUYA, Akio, c/o NIFTY CORPORATION, Shinagawa-ku, Tokyo 140-8544 (JP)
(74) Representative: Betten & Resch
(86) International application number: JP0106873
(87) International publication number: WO02015022

(57) **Abstract**

An object of this invention is to facilitate the transfer of personal information by the cooperation between service providers. When the member registration is carried out for the cooperation system 7, an authentication request and data request are transmitted to the authentication system 5 that ties up with the cooperation system 7. The authentication system 5 prompts the customer terminal 3 to input an ID and password for the authentication system 5. It performs the customer authentication processing by using information stored in the authentication information DB 51 when the ID and password are received from the customer terminal 3. Afterwards, it reads out personal information of the customer, which is stored in the personal information DB 53, and transmits it to the cooperation system 7. The cooperation system 7 transmits the personal information input screen for the member registration to the customer terminal 3 in a form in which the received personal information is embedded and the correction and/or addition thereof are enabled. The customer corrects the information from the personal information DB 53, which is included in the personal information input screen for the member registration, and/or inputs unregistered information, and has the customer terminal 3 transmit it to the cooperation system 7. The cooperation system 7 stores the received information to the member information DB 73.

## Description

### [Technical Field]

This invention relates to the customer authentication, more particularly to a technology to make another system carry out the customer authentication and to acquire personal information being kept in another system.

### [Background Technology]

Various services are provided on the Internet, and a lot of Web sites where the member registration is needed exist, too. The user should register similar personal information, such as a name, E-mail address and the like, on each Web site where the service that he or she needs is provided. Therefore, it took a lot of user's time for the input.

### [Summary of the Invention]

Therefore, an object of the invention is to provide the technology to facilitate the transfer of the personal information by the cooperation between service providers.

Moreover, another object of this invention is to provide the technology to facilitate the utilization of the authentication processing result and the transfer of the personal information by the cooperation between service providers.

According to a first aspect of this invention, a computer system (authentication system side) comprises: authentication information input request means for requesting an input of member identification information and a password for a customer terminal, if, for example, an authentication request is received from a cooperation system communicating with the customer terminal; and customer authentication processing means for performing a customer authentication processing by using information stored in an authentication information storage device, if the member identification information and the password are received from the customer terminal; personal information transmission means for reading out the personal information corresponding to the member identification information from a personal information storage device, and transmitting it to the cooperation system, if the customer authentication processing succeeded.

In the authentication system side, in response to the authentication request from the cooperation system, for instance, the authentication processing for the customer who is operating the customer terminal is carried out. Besides, the member information of the customer, which has been registered beforehand, is also transmitted to the cooperation system. As a result, after it is confirmed that the person is the customer himself or herself, the personal information is transferred to the cooperation system. Therefore, if he or she registers the personal information in the authentication system side once, the customer can register in the cooperation system without inputting the same personal information.

Incidentally, it is also possible to configure the aforementioned authentication information input request means so as to receive a personal information request with the authentication request from the cooperation system.

Besides, it is also possible to configure the aforementioned personal information transmission means so as to read out the personal information corresponding to the member identification information from the personal information storage device, and to transmit it to the cooperation system if the personal information request is received from the cooperation system separately from the authentication request, and the customer authentication processing succeeded.

The aforementioned personal information request may include the type of the personal information determined on the cooperation system side. That is, only specified information may be sent back from the authentication system side when specifying only necessary information. On the other hand, all information on the customer, which is stored on the authentication system side may be specified. In addition, information necessary for each cooperation system may be registered on the authentication system side, and identification information of the cooperation system may be transmitted without transmitting the personal information request.

Besides, the first aspect of this invention may further comprise means for carrying out a processing for confirming the validity of the cooperation system if the authentication request is received from the cooperation system communicating with the customer terminal. The tie-up relation between the cooperation system side and the authentication system side is presumed.

Besides, it may further comprises means for judging whether the member is a member for whom the service can be provided if the member identification information is received from the customer terminal. For instance, this means to judge whether or not a setting is made that it is possible to read out the personal information from the personal information storage device, and to transmit it. Incidentally, it is also possible to treat the registration of the personal information in the personal information storage device as the permission of the transmission, and therefore, this processing need not be carried out in this case. However, there is also a case where settings whether or not the permission of the transmission is granted is made for each cooperation system or each category of the service the cooperation provides.

According to a second aspect of this invention, a computer system (cooperation system side) comprises: authentication request output means for outputting an authentication request for the customer to the authentication system in response to an access request from a customer terminal; and personal information storage processing means for carrying out a processing for storing personal information into the member information storage device if the authentication processing succeeded in the authentication system, and the personal information on the customer is received from the authentication system. As a result, it becomes possible for the cooperation system side to utilize the personal information in the authentication system. From the viewpoint of the cooperation system side, it seems to have consigned the authentication processing to the authentication system.

When the access request is received from the customer terminal, IP address of the customer terminal is held in the memory, for instance. Then, the authentication request for the customer, including the IP address is outputted to the authentication system, for instance. The authentication system transmits an input request of the member ID and the password in the authentication system to the customer terminal by using the IP address, and acquires the member ID and the password to carry out the authentication processing. When the authentication processing in the authentication system succeeded, and the personal information on the customer is received from the authentication system, it is held in the memory. Though it may be stored in the member information storage device immediately, the personal information is transmitted to the customer terminal by using the IP address held in the memory to make the customer perform confirmation or additional and/or correction of its contents. Then, the contents after the confirmation or the addition and/or correction is stored into the member information storage device. As a result, the condition of the service provision in the cooperation system became satisfactory.

It is also possible to configure the aforementioned personal information storage processing means so as to include means for transmitting the personal information received from the authentication system to the customer terminal; and means for storing the personal information into the member information storage device if the confirmation of the personal information is received from the customer terminal.

Besides, it is possible to configure the aforementioned personal information storage processing means so as to include means for transmitting the personal information received from the authentication system to the customer terminal in a form in which the correction or addition thereof is enabled; means for transmitting information for causing to confirm the contents of the received personal information to the customer terminal if the personal information is received from the customer terminal; and means for storing the personal information received from the customer terminal into the member information storage device if the confirmation of the personal information is received from the customer terminal.

In addition, the aforementioned authentication request output means may be configured so as to output the personal information request with the authentication request to the authentication system.

The second aspect of this invention may further comprise: means for judging whether or not member identification information is stored in the member information storage device, if the authentication succeeds in the authentication system and the member identification information in the authentication system is received; and means for outputting the personal information request including the member identification information to the authentication system, if the member identification information is not stored in the member information storage device and the personal information of the customer is not stored in the member information storage device.

Besides, the aforementioned personal information storage processing means may be configured so as to judge whether or not member identification information is stored in the member information storage device, if the authentication processing succeeded in the authentication system, and the personal information including member identification information of the customer is received from the authentication system; and means for transmitting the personal information received from the authentication system to the customer terminal in a form in which the correction or addition thereof is enabled, if the member identification information is not stored in the member information storage device and the personal information of the customer is not stored in the member information storage device.

Moreover, the aforementioned personal information storage processing means may further be configured so as to include means for transmitting information for causing to confirm the contents of the received personal information to the customer terminal, if the personal information is received from the customer terminal; and means for storing the personal information received from the customer terminal into the member information storage device, if confirmation is received from the customer terminal.

Incidentally, in a case where member identification information is not stored in the member information storage device but the personal information of the customer is stored in the member information storage device, the second aspect of the invention further comprises means for prompting the customer terminal to input identification information in this computer system, means for correspondingly storing the identification information in this computer system and the member identification information into the member information storage device, if the identification information in this computer system is received from the customer terminal. As a result, the identification information in the authentication system and the identification information in the cooperation system side are associated.

Incidentally, the computer system according to the aforementioned first aspect and second aspect of the invention can be represented as a method for transmitting member information and a method for acquiring personal information executed by the computer system. In addition, it is possible to implement the computer system by a program to cause a usual computer to execute, and the program is stored in a storage medium or storage device such as a floppy disk, CD-ROM, a magneto-optical disk, a semiconductor memory, and a hard disk. Moreover, intermediate data during processing is stored in the storage device such as main memories of the computer.

### [Brief description of the drawings]

Fig.1 is a drawing showing the outline of the entire system in this embodiment;
Fig.2 is a drawing showing a first portion of a processing flow in a first embodiment;
Fig.3 is a drawing showing an example of a screen for inputting an ID and password for the authentication system;
Fig.4 is a drawing showing a second portion of the processing flow in the first embodiment;
Fig.5 is a drawing showing an example of a screen for inputting the personal information for the member registration;
Fig.6 is a drawing showing a first portion of a processing flow in a second embodiment;
Fig.7 is a drawing showing a second portion of the processing flow in the second embodiment;
Fig.8 is a drawing showing an example of a screen for inputting an ID and password for the cooperation system;
Fig.9 is a drawing showing a first portion of a processing flow in a third embodiment; and
Fig.10 is a drawing showing a second portion of the processing flow in the third embodiment.

### [Best mode for carrying out the invention]

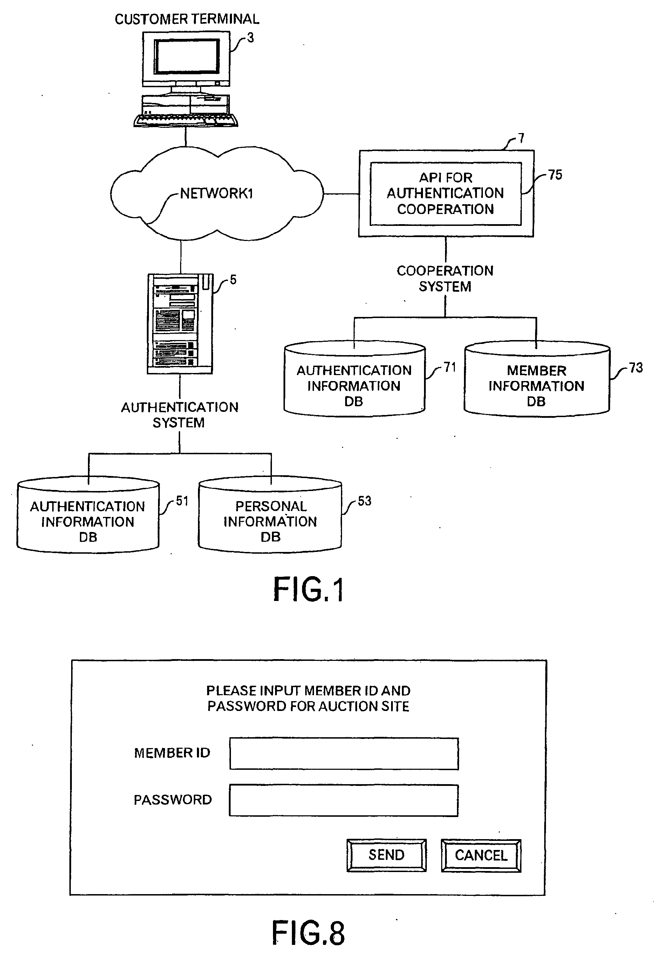

Fig. 1 shows a system outline in one embodiment of this invention. For instance, one or plural customer terminals 3 operated by a customer, an authentication system 5 for carrying out an authentication processing and managing personal information registered in advance by the customer, and a cooperation system 7 that cooperates with the authentication system 5 to request authentication and to request the personal information to the authentication system 5 are connected with a network 1 that is the Internet. Incidentally, a plurality of authentication systems 5 and cooperation systems 7 may be connected with the network 1. Especially, a plurality of cooperation systems 7 may exist for one authentication system 5. The authentication system 5 and cooperation system 7 have a web server function, and customer terminal 3 can execute a Web browser. The authentication system 5 manages an authentication information DB 51 that stores customer's authentication information and authentication information for the cooperation systems 7 and a personal information DB 53, to which the customer registers own personal information in advance. The cooperation system 7 manages an authentication information DB 71 that stores customer's authentication information for the cooperation system 7 and a member information DB 73 for storing member information on the members of the cooperation system 7.

### [First embodiment]

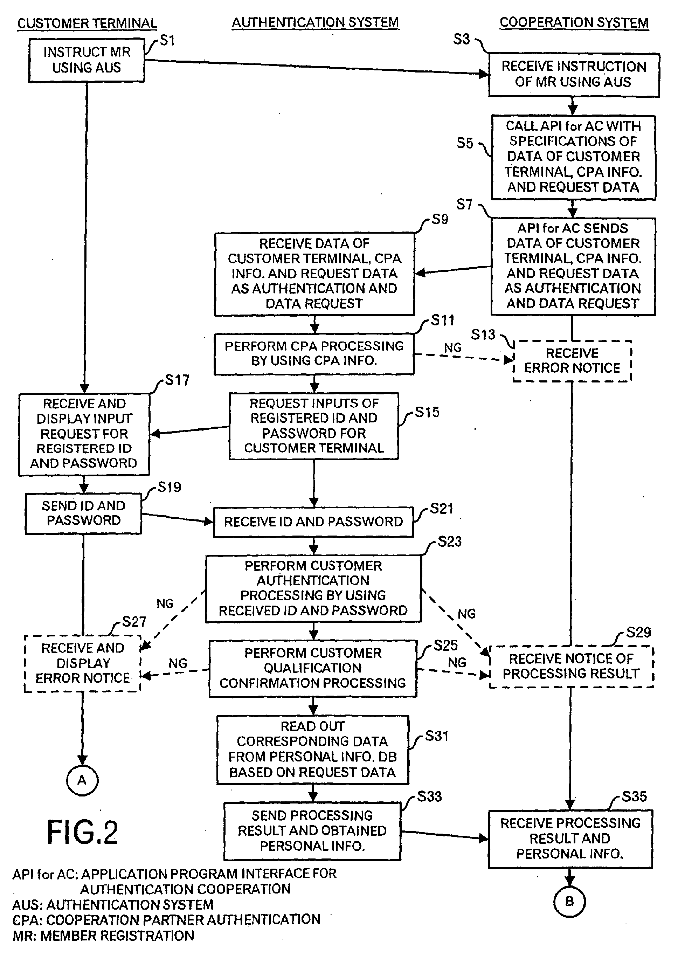

Next, a processing in a case where the customer performs the member registration for the cooperation system 7 by using the authentication system 5 in the system shown in Fig. 1 will be explained by using Figs. 2 to 5. The customer operates the customer terminal 3 to make it transmit an instruction of the member registration by using the authentication system 5 to the cooperation system 7 (step S1). When the cooperation system 7 receives the instruction of the member registration by using the authentication system 5 from the customer terminal 3 (step S3), it calls an Application Program Interface (API) 75 for authentication cooperation by specifying data of the customer terminal (for instance, an IP address of the customer terminal), cooperation partner authentication information (information for the authentication of the cooperation system 7, such as a system ID and password), and request data that is type of data needed by the member registration (step S5) . This API 75 for authentication cooperation is an API for the authentication system 5, and it is realized by a program supplied by the manager of the authentication system 5. It functions for following steps S7, S13, S29, and S35. Incidentally, using such the API 75 for authentication cooperation is mainly to secure the security of the authentication system 5, therefore, if it is solved, a mode that does not use the API for authentication cooperation is adoptable. Incidentally, the portions other than the API 75 for authentication cooperation are processed by Common Gateway Interface (CGI) or the like prepared in advance.

The API 75 for authentication cooperation transmits the data of the customer terminal, the cooperation partner authentication information and the request data to the authentication system 5 as an authentication and data request (step S7). The authentication system 5 receives the data of the customer terminal, the cooperation partner authentication information and the request data as the authentication and data request (step S9). For instance, the authentication system 5 also processes with an API (a program to realize it) corresponding to the API 75 for authentication cooperation in the cooperation system 7. First, the authentication system 5 carries out the authentication processing of the cooperation system 7 by using the cooperation partner authentication information (step S11). More concretely, the cooperation partner authentication information stored in the authentication information DB 51 and the cooperation partner authentication information received from the cooperation system 7 are compared to judge whether or not they coincide each other. The authentication error notice is transmitted to the cooperation system 7 when it is judged in this cooperation partner authentication processing that it is not the cooperation system 7 registered beforehand. The API 75 for authentication cooperation in the cooperation system 7 receives the error notice from the authentication system 5 (step S13) , and outputs the error notice to a calling source (for instance, CGI).

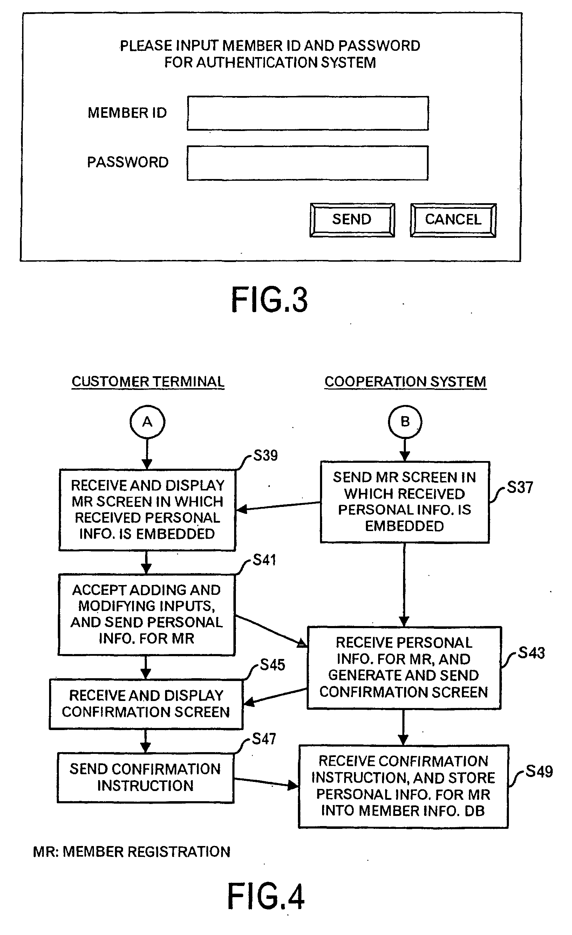

When it is confirmed that it is genuine cooperation system 7 in the cooperation partner authentication processing, the authentication system 5 transmits an input request of the registered ID and password for the authentication system 5 to the customer terminal 3 by using the data of the customer terminal (for instance, the IP address) (step S15). The customer terminal 3 receives the input request of the registered ID (identification information) and password from the authentication system 5, and displays it on the display device (step S17) . For instance, a screen as shown in Fig.3 is displayed. Here, a sentence prompting to input the member ID and password for the authentication system, input columns for the member ID and password, a send button for transmitting the inputted member ID and password and a cancel button for canceling this processing are included. Here, the customer operates the customer terminal 3 to input the member ID and password and causes it to transmit them to the authentication system 5 (step S19).

The authentication system 5 receives the ID and password from the customer terminal 3 (step S21), and carries out the customer authentication processing by using the received ID and password (step S23). More specifically, the authentication system 5 reads out the password corresponding to the received ID from the authentication information DB 51, and compares it with the received password to judge whether or not they coincide each other. If it is judged that they do not coincide, the authentication system 5 transmits the error notice to the customer terminal 3. The customer terminal 3 receives and displays this error notice (step S27). Here, it may transmit screen information (Web page data: HTML file and image files when they are referred) in which columns for inputting the registered ID and password again are provided. The customer inputs the registered ID and password again, and transmits them to the authentication system 5 (step S19) . The re-input and retransmission of the registered ID and password are permitted twice, for instance, and the authentication system 5 transmits the notice of the processing result showing the failure in the customer authentication to the cooperation system 7 when failing in the customer authentication any further. The API 75 for authentication cooperation in the cooperation system 7 receives the notice of the processing result (step S29) , and notifies the calling source (for instance, CGI) of the failure.

In a case where the customer authentication processing succeeded, the authentication system 5 carries out the customer qualification confirmation processing (step S25). Here, it confirms whether this service is available for the customer, for example, though the ID and password of the customer were genuine. For instance, if the rule is determined, which defines that the customer cannot use this service in a case where he or she has not registered the utilization of this service to the authentication system 5 in advance, the authentication system 5 should not transmit the personal information requested by the cooperation system 7 to the cooperation system 7 even if the customer authentication processing succeeded. Therefore, the authentication system 5 checks this. For instance, it carries out this step by using information representing whether this service can be used, which is stored in the authentication information DB 51 or the personal information DB 53. However, in a case where the utilization of this service need not be registered beforehand, it may not carry out this step. If the customer is not qualified in the customer qualification confirmation processing, it transmits an error notice to the customer terminal 3, and transmits a notice of the processing result to the cooperation system 7. The customer terminal 3 receives and displays the error notice (step S27). The cooperation system 7 receives the notice of the processing result (step S29).

In a case where it is judged at the qualification confirmation processing that this service can be used, it reads out pertinent data in the personal information DB 53 based on the request data received from the cooperation system 7 (step S31). Here, the request data includes necessary information items or codes of the information items among information items registered in the personal information DB 53. However, in a case where information necessary for the cooperation system 7 is all information items that are registered in the personal information DB 53, information representing "All" is included in the request data. Incidentally, a rule may be adopted, in which the data request is interpreted as "All" when only the data request is sent. In this embodiment, though the information item can be specified, in a case where only "All" can be specified, for instance, there is no need to send the request data. Moreover, if the information items that are surely requested are fixed, a table including the identification information and the requested information items of the cooperation system 7 may be prepared in the authentication system 5, and in a case where it receives the authentication request including the identification information of the cooperation system 7 or the authentication and data request, it may automatically transmit the requested information items defined in the table.

Incidentally, the information items registered in the personal information DB 53 includes the member number, name, E-mail address, address, ZIP code, telephone number, fax number, cellular phone number, gender, date of birth, and receiver's address information (if he or she specifies receiver's address), etc. For instance, although these kinds of information can be registered, all kinds of information need not necessarily be registered. It is because there is a case where he or she doesn't want to transfer specific information items (for instance, cellular phone number) in accordance with the kind of the cooperation system 7 and the like, for instance.

It transmits information acquired from the personal information DB 53 and the processing result (for instance, including information specifying the authentication and data request corresponding to the processing result) to the cooperation system 7 (step S33). If the information item not registered in the personal information DB 53 is set to the request data, it transmits error information with the processing result. For instance, in a case where all the request data cannot be acquired, the processing result includes information representing that all the request data was not able to be acquired. The API 75 for authentication cooperation of the cooperation system 7 receives the processing result and the personal information that was able to be read out from the personal information DB 53, from the authentication system 5 (step S35) . Then, the API 75 for authentication cooperation outputs received processing result and personal information to the calling source (such as CGI) of the API 75 for authentication cooperation.

Next, the processing shifts to Fig. 4 through a terminal A and a terminal B. The cooperation system 7 transmits information (Web page data) on the member registration screen to the customer terminal 3 in a state in which the received personal information is embedded into the member registration screen (step S37) . The customer terminal 3 receives and displays information on the registration screen into which the personal information registered in the authentication system 5 is embedded (step S39).

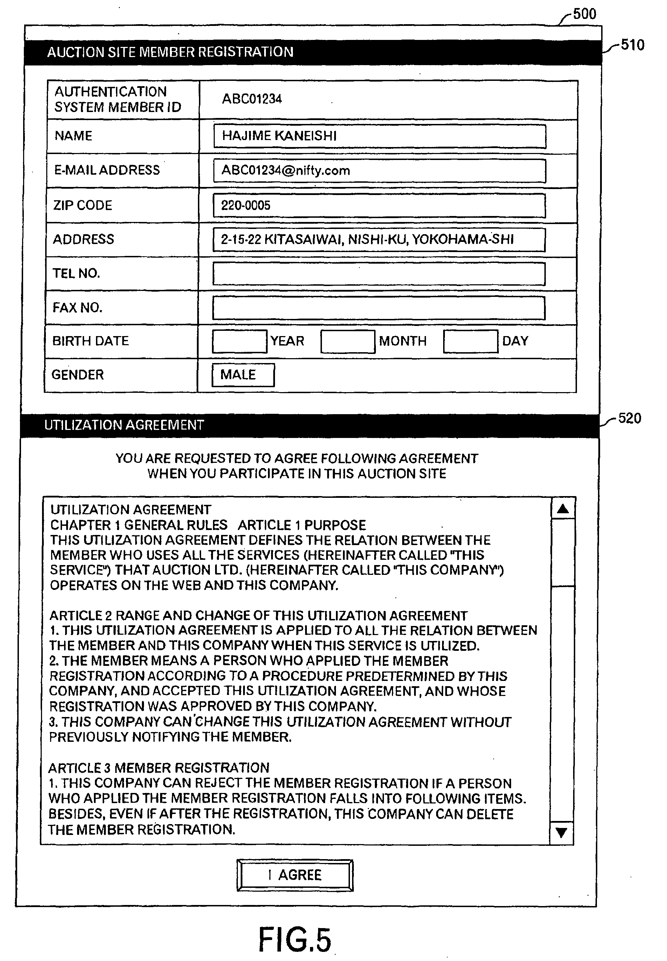

This display example is shown in Fig. 5. Fig. 5 is a member registration screen 500 to an auction site. The member registration screen 500 includes a part 510 for inputting member registration information for the auction site, and utilization agreement presentation part 520. To carry out the member registration on this auction site, the authentication system member ID (hereinafter, it is called the ID in the authentication system) and name, mail address, ZIP code, address, telephone number, fax number, date of birth, and gender must be inputted and be transmitted. In this example, the authentication system member ID is received from the authentication system 5. However, this information cannot be changed at the customer terminal 3. Besides, the name, mail address, ZIP code, address, and gender are also received from the authentication system 5. In this example, these items are presented to the customer in the state in which they are embedded so as to enable correction or addition. As for information on the telephone number, fax number, and date of birth, it is information that was not able to received from the authentication system 5. In this example, the customer inputs these kinds of information. The rule of this auction site is shown in the utilization agreement presentation part 520, and when he or she inputs member registration information and presses an "agree" button provided in a lower portion of the screen 500 if he or she agrees this rule, the member registration information and information indicating that he or she agreed the rule are transmitted to the cooperation system 7.

That is, the customer terminal 3 accepts the input of the addition and/or the correction to the personal information in the part 510 for inputting the member registration information on the member registration screen 500 as shown in Fig. 5, from the customer, and transmits the personal information for the member registration to be registered on the member registration screen 500 to the cooperation system 7 (step S41). The cooperation system 7 receives the personal information for the member registration from the customer terminal 3, generates information (Web page data) on a confirmation screen of the personal information for the member registration of that customer, and transmits it to the customer terminal 3 (step S43). The customer terminal 3 receives and displays information on the confirmation screen (step S45). This confirmation screen is a screen in which the modification of all the personal information for the member registration, which is inputted in the part 510 for inputting the member registration information in Fig. 5, is disabled. Besides, a "confirm" button and a "cancel" button are provided.

The customer operates the customer terminal 3, pushes the "confirm" button, and causes it to transmit the confirmation instruction to the cooperation system 7 (step S47) . The cooperation system 7 receives the confirmation instruction from the customer terminal 3, and registers the personal information for the member registration received at the step S43 in the member registration DB 73 (step S49). Incidentally, when the "cancel" button on the confirmation screen is pushed, the customer terminal 3 transmits the cancellation instruction. Then, the cooperation system 7 receives the cancellation instruction, and discards the personal information for the member registration received beforehand.

As described above, if the customer registers the personal information in the authentication system 5 once, it becomes possible for the customer to have the personal information transmitted easily to the cooperation system 7 cooperating with the authentication system 5. Because the authentication processing can be performed in the authentication system 5, the cooperation system 7 can carry out the member registration for its own service after the personal identification was completed. Besides, it becomes possible for the cooperation system 7 to promote customer's member registration by using the authentication system 5.

Incidentally, Fig. 2 shows the processing procedure that the cooperation system 7 requests the authentication processing to the authentication system 5. However, first the cooperation system 7 may transmit information on a screen including information (such as address information to which the processing result and the like must be transmitted, and cooperation partner authentication information) concerning the cooperation system 7, into which a link for accessing to the authentication system 5 is embedded, to the customer terminal 3, and when the customer terminal 3 accesses the authentication system 5 by the customer clicking the link, it may transmit information concerning the cooperation system 7 from the customer terminal 3 to the authentication system 5.

### [Second embodiment]

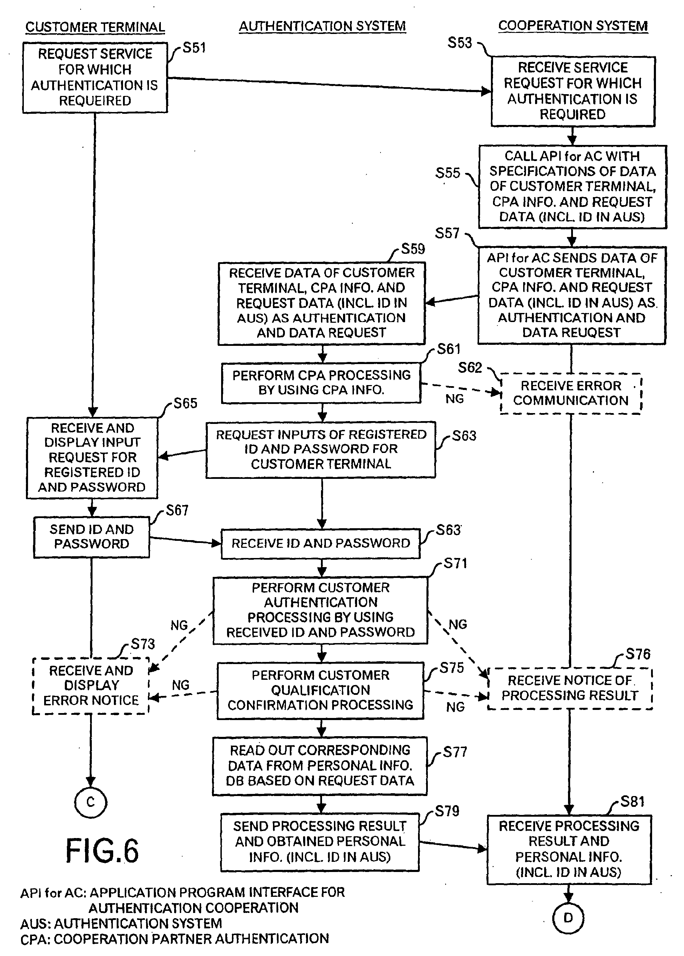

Next, an example of a processing flow will be explained by using Figs. 6 to 8, in a case where, when the service by the cooperation system 7 is provided, it uses the result of the authentication processing in the authentication system 5, and the member registration is carried out if the member registration for the service provision is not carried out.

The customer operates the customer terminal 3 to have a service request, for which authentication is necessary, output to the cooperation system 7 (step S51). For instance, the service request, for which authentication is necessary, is a bidding request in the auction. When the cooperation system 7 receives the service request, for which authentication is necessary, from the customer terminal 3 (step S53) , it specifies data of the customer terminal 3 (for instance, an IP address of the customer terminal), cooperation partner authentication information (authentication information (for example, an ID and password) of the cooperation system 7) , and request data (here, including an ID in the authentication system 5) including the types of data needed at the member registration, and calls the API 75 for authentication cooperation (step S55). This API 75 for authentication cooperation carries out the following steps S57, S62, S76 and S81. Incidentally, the portions other than the API 75 for authentication cooperation are processed by the CGI or the like prepared beforehand. The ID in the authentication system 5 is included in the request data to use it to retrieve the member registration DB 73 later.

The API 75 for authentication cooperation transmits the data of the customer terminal, the cooperation partner authentication information, and the request data (including the ID in the authentication system) to the authentication system 5 as an authentication and data request (step S57). The authentication system 5 receives the data of the customer terminal, the cooperation partner authentication information and the request data as the authentication and data request (step S59). For instance, the authentication system 5 also processes it with an API corresponding to the API 75 for authentication cooperation in the cooperation system 7. First, the authentication system 5 carries out the authentication processing of the cooperation system 7 by using the cooperation partner authentication information (step S61). More specifically, the authentication system 5 compares the cooperation partner authentication information stored in the authentication information DB 51 with the cooperation partner authentication information received from the cooperation system 7, and judges whether or not they are the same. If it is judged in this cooperation partner authentication processing that it is not the cooperation system 7 registered in advance, the authentication error notice is transmitted to the cooperation system 7. The API 75 for authentication cooperation in the cooperation system 7 receives the error notice from the authentication system 5 (step S62), and outputs the error notice to the calling source.

When it is confirmed that it is the genuine cooperation system 7 in the cooperation partner authentication processing, the authentication system 5 requests the input of the registered ID and password of the authentication system 5 for the customer terminal 3 by using the data of the customer terminal (for instance, the IP address) (step S63) . The customer terminal 3 receives the input request of the registered ID (identification information) and password from the authentication system 5, and displays it on the display device (step S65) . For instance, the screen as shown in Fig.3 is displayed. Here, the customer operates the customer terminal 5 to input the member ID and the password, and has it transmit to the authentication system 5 (step S67).

The authentication system 5 receives the ID and password from the customer terminal 3 (step S69), and carries out the customer authentication processing by using the received ID and password (step S71) . More specifically, the authentication system 5 reads out the password corresponding to the received ID from the authentication information DB 51, compares it with the received password, and judges whether or not they coincide each other. If it is judged that they do not coincide, it transmits the error notice to the customer terminal 3. The customer terminal 3 receives and displays this error notice (step S73). Here, the authentication system 5 may transmit information on a screen in which a column for causing to input the registered ID and password again. The customer inputs the registered ID and password again, and transmits them to the authentication system 5 (step S67). The retransmission and the re-input of the registered ID and password are permitted twice, for instance, and if the customer authentication fails any further, it transmits a notice of the processing result, which shows the failure in the customer authentication, to the cooperation system 7. The API 75 for authentication cooperation in the cooperation system 7 receives the notice of the processing result (step S76), and it notifies the calling source of the failure.

If the customer authentication processing succeeds, the authentication system 5 carries out the customer qualification confirmation processing (step S75). Here, it confirms whether this service is available for the customer, for instance, though the customer's ID and password were genuine. For instance, if the rule is determined, which defines that he or she cannot use this service in a case where he or she has not registered the utilization of this service to the authentication system 5 in advance, the authentication system 5 should not transmit the personal information requested by the cooperation system 7 to the cooperation system 7 even if the customer authentication processing succeeded. Therefore, the authentication system 5 checks this. For instance, it carries out this step by using information representing whether this service can be used, which is stored in the authentication information DB 51 or personal information DB 53. However, in a case where the utilization of this service need not be registered beforehand, it may not carry out this step. If the customer is not qualified in the customer qualification confirmation processing, it transmits an error notice to the customer terminal 3, and transmits a notice of the processing result to the cooperation system 7. The customer terminal 3 receives and displays the error notice (step S73). The cooperation system 7 receives the notice of the processing result (step S76).

In a case where it is judged at the qualification confirmation processing that this service can be used, it reads out pertinent data in the personal information DB 53 based on the request data (including the ID in the authentication system 5) received from the cooperation system 7 (step S77). Here, the request data includes necessary information items or codes of the information items among information items registered in the personal information DB 53. As for the modified modes of the request data, they are the same as in the first embodiment.

It transmits the cooperation system 7 information obtained from the personal information DB 53 (including the ID in the authentication system 5) and the processing result (for instance, information specifying the authentication and data request corresponding to the processing result) (step S79). If the information item not registered in the personal information DB 53 is set to the request data, it transmits error information with the processing result. For instance, in a case where all the request data cannot be acquired, the processing result includes information representing that all the request data was not able to be acquired. The API 75 for authentication cooperation of the cooperation system 7 receives the processing result and the personal information (including the ID in the authentication system 5) that was able to be read out from the personal information DB 53, from the authentication system 5 (step S81) . Then, the API 75 for authentication cooperation outputs received processing result and personal information to the calling source (such as CGI) of the API 75 for authentication cooperation.

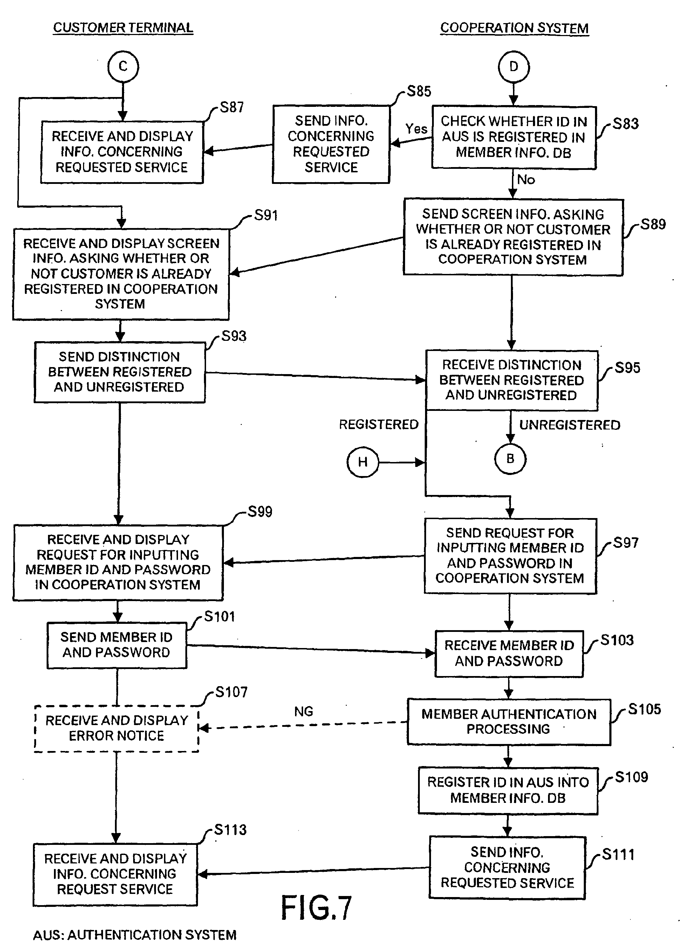

Next, processing shifts to Fig. 7 through terminals C and D. The cooperation system 7 checks whether an ID in the authentication system 5, which is received from the authentication system 5, for the customer who is operating the customer terminal 3 has been registered in the member information DB 73 (step S83). It can be judged that the member registration is completed if the ID of the customer in the authentication system 5 is already registered in the member information DB 73. It transmits information on the request service to the customer terminal 3 if it can be judged that the member registration is completed (step S85). For instance, it transmits information on the bidding screen in the auction. The customer terminal 3 receives and displays information on the request service (step S87).

On the other hand, if the ID in the authentication system 5 is not registered in the member information DB 73, two kinds of cases are considered. Those are a case where he or she is not registered for the cooperation system 7 and a case where he or she is registered in the cooperation system 7 without any relation with the authentication system 5. In the former case, it is necessary to register the member in the cooperation system 7 as shown in the first embodiment. In the latter case, it is necessary to register the ID in the authentication system 5 into the member information DB 73, and to set a link in the cooperation system 7.

Therefore, if the ID in the authentication system 5 is not registered in the member information DB 73, it transmits information on a screen to ask whether the person has been registered in the cooperation system 7, to the customer terminal 3 (step S89). For instance, it transmits information on a screen including a sentence "Have you registered in the cooperation system 7?", a Yes button and a No button. The customer terminal 3 receives and displays information on the screen in which whether the ID has been registered in the cooperation system is asked (step S91). In response to this, the customer pushes the Yes button or the No button, and has it transmit information indicating "registered" (in a case of Yes) or "unregistered" (in a case of No) to the cooperation system 7. The cooperation system 7 receives the information indicating "registered" or "unregistered" from the customer terminal 3 (step S95).

If the instruction of "unregistered" is received from the customer terminal 3 here, the processing, which is shown in Fig. 4 and is connected via the terminal B, is carried out. That is, the cooperation system 7 transmits information on the member registration screen to the customer terminal 3 in a form in which the received personal information is embedded into the member registration screen. The customer terminal 3 receives and displays the information on the registration screen in the state where the personal information received from the authentication system 5 is embedded. For instance, the screen as shown in Fig. 5 is displayed. The customer terminal 3 accepts inputs of the addition and/or the correction of the personal information to the member registration information input part 510 on the member registration screen 500 as shown in Fig. 5 from the customer, and transmits the personal information to be registered in the member registration screen 500 to the cooperation system 7. The cooperation system 7 receives the personal information for the member registration from the customer terminal 3, generates information on a confirmation screen for the personal information for the member registration of the customer, and transmits it to the customer terminal 3. The customer terminal 3 receives and displays the information on the confirmation screen. The customer operates the customer terminal 3 to push a confirm button, and has it transmit the confirmation instruction to the cooperation system 7. The cooperation system 7 receives the confirmation instruction from the customer terminal 3, and registers the received personal information for the member registration in the member registration DB 73.

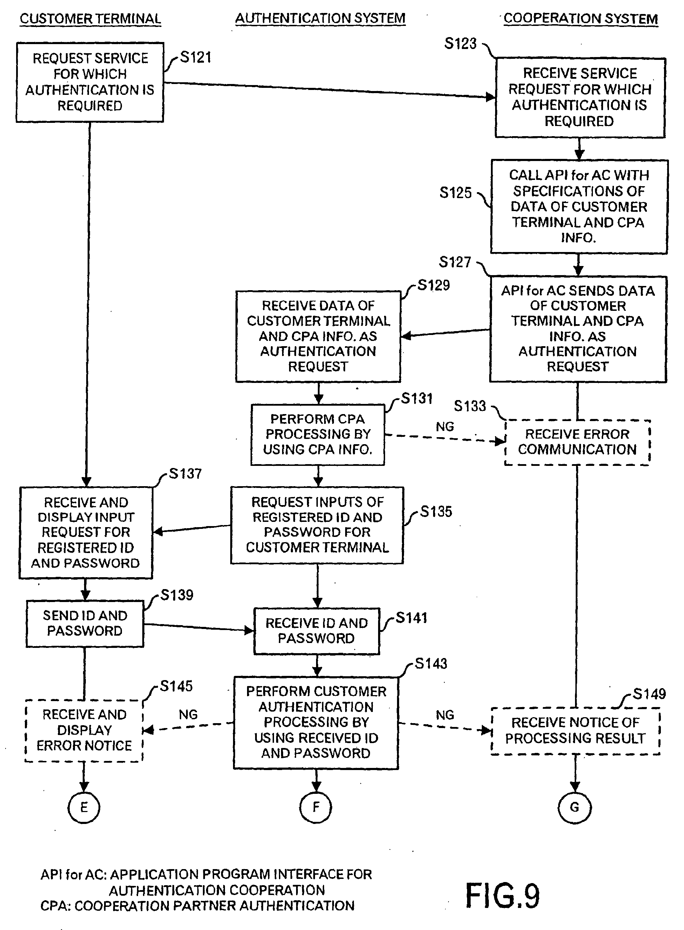

On the other hand, if it receives the instruction of "registered" from the customer terminal 3, it transmits the input request of the member ID and password in the cooperation system 7 (step S97) . It is because it is necessary to confirm the registration status to the customer in a case where the customer has been registered. The customer terminal 3 receives and displays the input request of the member ID and password in the cooperation system 7 (step S99). For instance, the drawing as shown in Fig. 8 is displayed. That is, in this example, a sentence prompting to input the member ID and password for the auction site, an input column of the member ID, an input column of the password, a send button, and a cancel button are presented to the customer.

The customer inputs the member ID and password, and has the customer terminal 3 transmit them to the cooperation system 7. The cooperation system 7 receives the member ID and password in the cooperation system from the customer terminal 3 (step S103) , and carries out the member authentication processing (step S105). The member authentication processing is carried out by using the member ID and password registered in the authentication information DB 71 in advance. More specifically, it retrieves the authentication information DB 71 by using the received member ID, reads out the corresponding password, and compares it with the received password. If they coincide each other, it can be said that the authentication processing succeeded. If they do not coincide, the error notice is transmitted to the customer terminal 3. As a result, the customer terminal 3 receives the error notice, and displays it for the customer (step S107).

The cooperation system 7 registers the ID in the authentication system 5, which is received at step S81, into the member information DB 73 if the authentication processing succeeds (step S109) . Then, it transmits information on the request service to the customer terminal 3 (step S111) . For instance, it transmits the information on the bidding screen of the auction. The customer terminal 3 receives and displays the information on the request service (step S113).

By carrying out the above-mentioned processing, if the customer remembers the ID and password in the authentication system 5, it becomes possible for him or her to receive services, for which authentication is necessary, even in other systems like the cooperation system 7 and the like, and he or she becomes convenient. In the cooperation system 7, it becomes possible to promote the customer's utilization and registration.

Incidentally, Fig. 6 shows the processing procedure that the cooperation system 7 requests the authentication processing to the authentication system 5. However, first the cooperation system 7 may transmit information on a screen including information (such as address information to which the processing result and the like must be transmitted, and cooperation partner authentication information) concerning the cooperation system 7, into which a link for accessing to the authentication system 5 is embedded, to the customer terminal 3, and when the customer terminal 3 accesses the authentication system 5 by the customer clicking the link, it may transmit information concerning the cooperation system 7 from the customer terminal 3 to the authentication system 5.

### [Third embodiment]

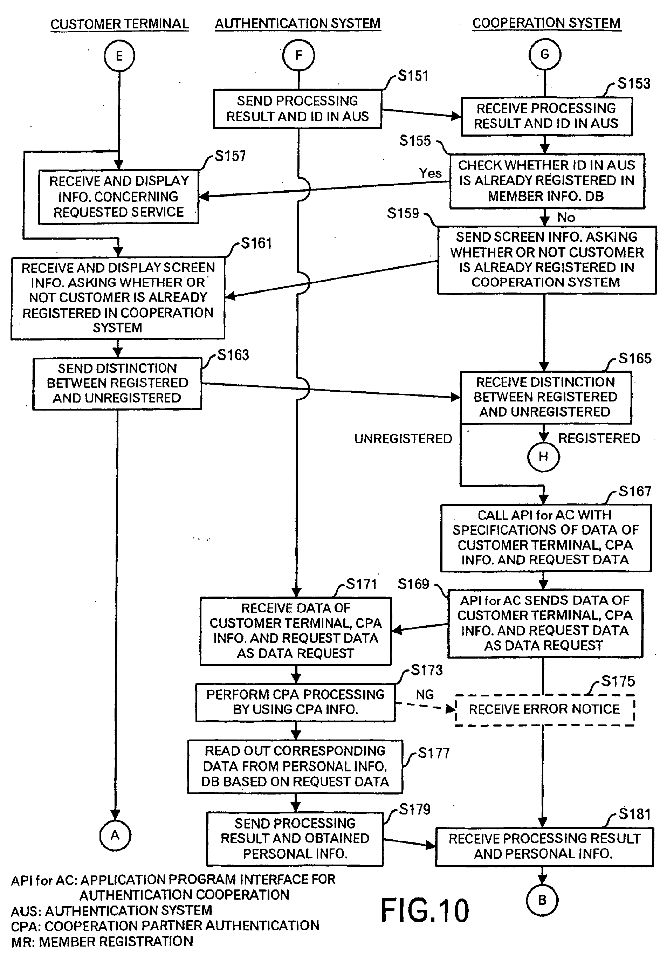

A processing flow in a case where the result of the authentication processing in the authentication system 5 is provided when the service by the cooperation system 7 and the member registration is carried out if the member registration for the service provision is not carried out will be explained in Figs. 9 and 10. Incidentally, the third embodiment is different from the second embodiment, in a point in which the data request is output to the authentication system 5, when customer's personal information is needed.

The customer operates the customer terminal 3 to have it output the service request, for which authentication is necessary, to the cooperation system 7 (step S121). For instance, the service request, for which authentication is necessary, is a bidding request in the auction. When the cooperation system 7 receives the service request, for which authentication is necessary, from the customer terminal 3 (step S123), it calls the API 75 for authentication cooperation by specifying the data of the customer terminal 3 (for instance, an IP address of the customer terminal) and the cooperation partner authentication information (authentication information (for instance, system ID and password) of the cooperation system 7) (step S125) . This API 75 for authentication cooperation executes the following steps S127, S133, S149, S153, S169, S175, and S181. Incidentally, the parts other than the API 75 for authentication cooperation are processed by a CGI and the like, which are prepared beforehand.

The API 75 for authentication cooperation transmits data of the customer terminal 3 and the cooperation partner authentication information to the authentication system 5 as an authentication request (step S127) . The authentication system 5 receives the data of the customer terminal 3 and the cooperation partner authentication information as the authentication request (step S129). For instance, the authentication system 5 also processes it with an API (a program to realize it) corresponding to the API 75 for authentication cooperation in the cooperation system 7. First, the authentication system 5 carries out the authentication processing of the cooperation system 7 by using the cooperation partner authentication information (step S131). More specifically, the authentication system 5 compares the cooperation partner authentication information stored in the authentication information DB 51 and the cooperation partner authentication information received from the cooperation system 7 to judge whether they coincide each other. The authentication system 5 transmits the authentication error notice to the cooperation system 7 if it is judged in the authentication processing of this cooperation partner that it is not the cooperation system 7 registered in advance. The API 75 for authentication cooperation of the cooperation system 7 receives the error notice from the authentication system 5 (step S133) , and outputs the error notice to the calling source.

When it is confirmed that it is the genuine cooperation system 7 in the authentication processing of the cooperation partner, the authentication system 5 requests the input of the registered ID and password of the authentication system 5 for the customer terminal 3 by using the data of the customer terminal 3 (for instance, the IP address) (step S135) . The customer terminal 3 receives the input request of the registered ID (identification information) and password from the authentication system 5, and displays it on the display device (step S137) . For instance, the screen as shown in Fig.3 is displayed. Here, the customer operates the customer terminal 3 to input the member ID and password, and has it transmit them to the authentication system 5 (step S139).

The authentication system 5 receives the ID and password from the customer terminal 3 (step S141), and carries out the customer authentication processing by using the received ID and password (step S143) . More specifically, the authentication system 5 reads out the password corresponding to the received ID from the authentication information DB 51, and compares it with the received password to judge whether or not they coincide. The authentication system 5 transmits an error notice to the customer terminal 3 if they do not coincide. The customer terminal 3 receives and displays this error notice (step S145) . Here, the authentication system 5 may transmit screen information in which a column for causing to input the registered ID and password again. The customer inputs the registered ID and password again, and transmits them to the authentication system 5 (step S139) . The re-input and the retransmission of the registered ID and password are permitted twice, for instance. Authentication system 5 transmits the notice of the processing result of showing the failure in the customer authentication to cooperation system 7 when failing in the customer authentication any further. API for authentication cooperation 75 of cooperation system 7 receives the notice of the processing result (step S149) , and notifies the failure to the calling source. Processing shifts to the Fig. 10 through terminals E, F, and G.

Next, the authentication system 5 transmits the authentication processing result and the ID in the authentication system 5, which is received from the customer terminal 3, to the cooperation system 7 (step S151). The cooperation system 7 receives the authentication processing result and the ID in the authentication system 5 from the authentication system 5 (step S153), checks whether or not the ID in the authentication system 5 has been registered in the member information DB 73 (step S155) . If the ID of the customer in the authentication system 5 has been registered in the member information DB 73, it can be judged that the member registration is completed. The cooperation system 7 transmits information on the request service to the customer terminal 3 when it can be judged that the member registration is completed. For instance, it transmits information on the bidding screen of the auction. The customer terminal 3 receives and displays information on the request service (step S157).

On the other hand, two kinds of cases are thought like being aforementioned when the ID in authentication system 5 is not registered in member information DB73 it. Those are a case where he or she is not registered for the cooperation system 7 and a case where he or she is registered in the cooperation system 7 without any relation with the authentication system 5. In the former case, it is necessary to register the member into the cooperation system 7 like the first embodiment. In the latter case, it is necessary to register the ID in the authentication system 5 into the member information DB 73, and to set a link in the cooperation system 7.

Therefore, if the ID in the authentication system 5 is not registered in the member information DB 73, it transmits information on a screen to ask whether the person has been registered in the cooperation system 7, to the customer terminal 3 (step S159). For instance, the cooperation system 7 transmits information on the screen including a sentence "Do you register in the cooperation system 7?", a Yes button and a No button. The customer terminal 3 receives and displays the screen to ask whether the person has been registered, from the cooperation system 7 (step S161) . In response to this, the customer pushes the Yes button or the No button, and the customer has the customer terminal 3 transmit information indicating "registered" (in a case of Yes) or "unregistered" (in a case of No) in the customer terminal 3. The cooperation system 7 receives information indicating "registered" or "unregistered" from the customer terminal 3 (step S165).

If the instruction indicating that he or she has been unregistered is received from the customer terminal 3 here, the processing, which is shown in Fig. 7 and is connected via a terminal H, is carried out. That is, it transmits the input request of the member ID and password in the cooperation system 7. The customer terminal 3 receives and displays the input request of the member ID and password in the cooperation system 7. For instance, the screen as shown in Fig. 8 is displayed. The customer inputs the member ID and password to have the customer terminal 3 transmit them to the cooperation system 7. The cooperation system 7 receives the member ID and password in the cooperation system from the customer terminal 3, and carried out the member authentication processing. The member authentication processing is carried out by using the member ID and password registered in the authentication information DB 71 beforehand. If the member authentication processing has failed, it transmits an error notice to the customer terminal 3. As a result, the customer terminal 3 receives the error notice, and displays it for the customer. If the authentication processing succeeds, the cooperation system 7 associates the ID in the authentication system 5 received at the step S81 with the member ID, and registers them into the member information DB 73. Then, the cooperation system 7 transmits information on the request service to the customer terminal 3. For instance, the cooperation system 7 transmits the information on the bidding screen of the auction. The customer terminal 3 receives and displays the information on the request service.

If it is judged that the ID in the authentication system 5 is not registered in the member information DB 73, the cooperation system 7 specifies data of the customer terminal 3 (for instance, an IP address of the customer terminal), cooperation partner authentication information (authentication information (for example, ID and password) of the cooperation system 7), and request data (here, including an ID in the authentication system 5) including the types of data needed at the member registration, calls the API 75 for authentication cooperation (step S167).

The API 75 for authentication cooperation transmits the cooperation partner authentication information, the ID in the authentication system 5, and the request data to the authentication system 5 as a data request (step S169). The authentication system 5 receives the cooperation partner authentication information, the ID in the authentication system 5, and the request data as the data request (step S171). For instance, the authentication system 5 also processes it with an API corresponding to the API 75 for authentication cooperation in the cooperation system 7. First, the authentication system 5 carries out the authentication processing of the cooperation system 7 by using the cooperation partner authentication information (step S173) . In the authentication processing of this cooperation partner, if it is judged that it is not the cooperation system 7 registered beforehand, it transmits an authentication error notice to the cooperation system 7. The API 75 for authentication cooperation in the cooperation system 7 receives the error notice from the authentication system 5 (step S175), and outputs the error notice to the calling source.

When it is confirmed that it is the genuine cooperation system 7 in the cooperation partner authentication processing, the authentication system 5 reads out the requested data from the personal information DB 53 based on the ID in authentication system 5 received from the cooperation system 7 (step S177) . Here, the request data includes the necessary information items or the codes of the information item among information items registered in the personal information DB 53. As for the modified modes of the request data, it is the same as in the first embodiment.

It transmits information acquired from the personal information DB 53 and the processing result to the cooperation system 7 (step S179). If the information item not registered in the personal information DB 53 is set to the request data, it transmits error information with the processing result. For instance, if all the request data cannot be acquired, the processing result includes information representing that all the request data was not able to be acquired. The API 75 for authentication cooperation in the cooperation system 7 receives the processing result and the personal information that was able to be read out from the personal information DB 53, from the authentication system 5 (step S181) . Then, the API 75 for authentication cooperation in the cooperation system 7 outputs the received processing result and the personal information to the calling source of API 75 for authentication cooperation.

The processing after this shifts to Fig. 4 through the terminals A and B. That is, the cooperation system 7 transmits the member registration screen to the customer terminal 3 in a state in which the received personal information is embedded into the member registration screen. The customer terminal 3 receives and displays information on the registration screen in which the personal information registered in the authentication system 5 is embedded. For instance, the screen as shown in Fig. 5 is displayed. Then, the customer terminal 3 accepts the input of the addition and/or correction of the personal information to the part 510 for inputting the member registration information on the member registration screen 500 as shown in Fig. 5 from the customer, transmits the personal information for the member registration to be registered on the member registration screen 500, to the cooperation system 7. The cooperation system 7 receives the personal information for the member registration from the customer terminal 3, generates information on the confirmation screen for the personal information for the member registration of the customer, and transmits it to the customer terminal 3. The customer terminal 3 receives and displays the information on the confirmation screen. The customer operates the customer terminal 3 to have it transmit the confirmation instruction to the cooperation system 7 by pushing the confirmation button. The cooperation system 7 receives the confirmation instruction from the customer terminal 3, and registers the received personal information for the member registration into member registration DB 73.

As described above, though three embodiments are shown, this invention is not limited to these. For instance, though the cooperation system 7 transmits the screen as shown in Fig. 5 to the customer terminal 3, and receives the personal information for the member registration, then further transmits the confirmation screen to the customer terminal 3, it may register into the member information DB 73 without outputting the confirmation screen.

Moreover, in the third embodiment, in order to inhibit the data request if the customer authentication is not completed, the key may be included in the processing result (step S151), the API 75 for authentication cooperation may output this key to the authentication system 5 at the step S169, and the validity of the key may be confirmed at the step S173, for example.

Moreover, though authentication information DB71 and member information DB73 are independently shown in the Fig. 1, these can be brought together in one.

Moreover, it is possible to configure the authentication system 5 or the cooperation system 7 with one server or with plural servers.

## Claims

1. A computer system comprising:
authentication information input request means for requesting an input of member identification information and a password for a customer terminal, if an authentication request is received;
customer authentication processing means for performing a customer authentication processing by using information stored in an authentication information storage device, if said member identification information and said password are received from said customer terminal; and
personal information transmission means for reading out personal information corresponding to said member identification information from a personal information storage device, and transmitting said personal information to a cooperation system, if said customer authentication processing succeeded.

2. The computer system as set forth in claim 1, wherein said authentication information input request means receives a personal information request with said authentication request from said cooperation system.

3. The computer system as set forth in claim 1, wherein said personal information transmission means reads out said personal information corresponding to said member identification information from said personal information storage device, and transmits said personal information to said cooperation system, if said personal information request is received from said cooperation system separately from said authentication request and said customer authentication processing succeeded.

4. The computer system as set forth in claim 2, **characterized in that** said personal information request includes a type of said personal information determined on said cooperation system side.

5. The computer system as set forth in claim 1, further comprising means for carrying out a processing for confirming validity of said cooperation system, if said authentication request is received from said cooperation system communicating with said customer terminal.

6. The computer system as set forth in claim 1, further comprising means for judging whether the member is a member for whom a service can be provided, if said member identification information is received from said customer terminal.

7. A computer system comprising:
authentication request output means for outputting an authentication request for a customer to an authentication system in response to an access request from a terminal of said customer; and
personal information storage processing means for carrying out a processing for storing personal information into a member information storage device, if an authentication processing succeeded in said authentication system and said personal information for said customer is received from said authentication system.

8. The computer system as set forth in claim 7, wherein said personal information storage processing means comprises:
means for transmitting said personal information received from said authentication system to said terminal of said customer; and
means for storing said personal information into said member information storage device, if confirmation of said personal information is received from said terminal of said customer.

9. The computer system as set forth in claim 7, wherein said personal information storage processing means comprises:
means for transmitting said personal information received from said authentication system to said terminal of said customer in a form in which correction or addition thereof is enabled;
means for transmitting information for causing to confirm contents of the received personal information to said terminal of said customer, if said personal information is received from said terminal of said customer terminal; and
means for storing said personal information received from said terminal of said customer into said member information storage device, if confirmation of said personal information is received from said terminal of said customer.

10. The computer system as set forth in claim 7, wherein said authentication request output means outputs personal information request with said authentication request to said authentication system.

11. The computer system as set forth in claim 7, further comprising:
means for judging whether or not member identification information is stored in said member information storage device, if the authentication succeeded in said authentication system and said member identification information in said authentication system is received; and
means for outputting personal information request including said member identification information to said authentication system, if said member identification information is not stored in said member information storage device and said personal information of said customer is not stored in said member information storage device.

12. The computer system as set forth in claim 10, **characterized in that** said personal information request includes a type of predetermined personal information.

13. The computer system as set forth in claim 7, wherein said personal information storage processing means comprises:
means for judging whether or not member identification information is stored in said member information storage device, if said authentication processing succeeded in said authentication system and personal information including said member identification information of said customer is received from said authentication system; and
means for transmitting said personal information received from said authentication system to said terminal of said customer in a form in which correction or addition thereof is enabled, if said member identification information is not stored in said member information storage device and said personal information of said customer is not stored in said member information storage device.

14. The computer system as set forth in claim 13, wherein said personal information storage processing means further comprises:
means for transmitting information for causing to confirm contents of the received personal information to said terminal of said terminal, if said personal information is received from said terminal of said customer; and
means for storing said personal information received from said terminal of said customer into said member information storage device, if confirmation is received from said terminal of said customer.

15. The computer system as set forth in claim 9, further comprising:
means for prompting said terminal of said customer to input identification information in this computer system, if member identification information is not stored in said member information storage device but said personal information of said customer is stored in said member information storage device; and
means for correspondingly storing said identification information in this computer system and said member identification information into the member information storage device, if said identification information in this computer system is received from said terminal of said customer.

16. An authentication and member information transmission method, comprising:
an authentication information input request step of requesting an input of member identification information and a password for a customer terminal, if an authentication request is received;
a customer authentication processing step of performing a customer authentication processing by using information stored in an authentication information storage device, if said member identification information and said password are received from said customer terminal; and
a personal information transmission step of reading out personal information corresponding to said member identification information from a personal information storage device, and transmitting said personal information to a cooperation system, if said customer authentication processing succeeded.

17. An authentication and personal information acquisition method comprising:
an authentication request output step of outputting an authentication request for a customer to an authentication system in response to an access request from a terminal of said customer; and
a personal information storage processing step of carrying out a processing for storing personal information into a member information storage device, if an authentication processing succeeded in said authentication system and said personal information for said customer is received from said authentication system.

18. A program for causing a computer to execute:
an authentication information input request step of requesting an input of member identification information and a password for a customer terminal, if an authentication request is received;
a customer authentication processing step of performing a customer authentication processing by using information stored in an authentication information storage device, if said member identification information and said password are received from said customer terminal; and
a personal information transmission step of reading out personal information corresponding to said member identification information from a personal information storage device, and transmitting said personal information to a cooperation system, if said customer authentication processing succeeded.

19. A program for causing a computer to execute:
an authentication request output step of outputting an authentication request for a customer to an authentication system in response to an access request from a terminal of said customer; and
a personal information storage processing step of performing a processing for storing personal information into a member information storage device, if an authentication processing succeeded in said authentication system and said personal information for said customer is received from said authentication system.
